(19) **Europäisches Patentamt**
**European Patent Office**
**Office européen des brevets**

(11) **EP 4 396 572 B1**

(12) **FASCICULE DE BREVET EUROPEEN**

(45) Date de publication et mention
de la délivrance du brevet:
**06.08.2025   Bulletin 2025/32**

(21) Numéro de dépôt: **22768854.6**

(22) Date de dépôt: **30.08.2022**

(51) Classification Internationale des Brevets (IPC):
**G01N 29/22** $^{(2006.01)}$          **G01N 29/04** $^{(2006.01)}$
**G01N 29/06** $^{(2006.01)}$          **G01N 29/265** $^{(2006.01)}$
**G01N 29/24** $^{(2006.01)}$          **G01N 27/90** $^{(2021.01)}$

(52) Classification Coopérative des Brevets (CPC):
**G01N 29/0618; G01N 29/043; G01N 29/0609;
G01N 29/0663; G01N 29/225; G01N 29/2437;
G01N 29/265;** G01N 27/9006

(86) Numéro de dépôt international:
**PCT/EP2022/074036**

(87) Numéro de publication internationale:
**WO 2023/031168 (09.03.2023 Gazette 2023/10)**

(54) **PROCÉDÉ DE VISUALISATION EN TEMPS RÉEL D'UN SIGNAL DE CONTRÔLE NON DESTRUCTIF D'UNE PIÈCE MÉCANIQUE**

VERFAHREN ZUR ECHTZEITANZEIGE EINES SIGNALS ZUR ZERSTÖRUNGSFREIEN PRÜFUNG EINES MECHANISCHEN TEILS

METHOD FOR DISPLAYING IN REAL TIME A SIGNAL FOR NON-DESTRUCTIVE TESTING OF A MECHANICAL PART

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **31.08.2021   FR 2109076**

(43) Date de publication de la demande:
**10.07.2024   Bulletin 2024/28**

(73) Titulaire: **Commissariat à l'Energie Atomique et
aux Energies
Alternatives
75015 Paris (FR)**

(72) Inventeurs:
• **CARDOSO, Michel**
  **91191 GIF-SUR-YVETTE CEDEX (FR)**
• **GRASSIN, Florence**
  **91191 GIF-SUR-YVETTE CEDEX (FR)**
• **SAINT MARTIN, Vincent**
  **91191 GIF-SUR-YVETTE CEDEX (FR)**

(74) Mandataire: **Atout PI Laplace
Immeuble Up On
25 Boulevard Romain Rolland
CS 40072
75685 Paris Cedex 14 (FR)**

(56) Documents cités:
**DE-A1- 102016 003 543**

• **DUBOIS MARC: "Hololens for Augmented
Reality NDT - NI Community", 30 October 2016
(2016-10-30), XP055915812, Retrieved from the
Internet <URL:https://forums.ni.com/t5/
Ultrasonics/
Hololens-for-Augmented-Reality-NDT/m-p/
3539380> [retrieved on 20220426]**

- **GUIDO MARIA ET AL: "POLITECNICO DI MILANO MECHANICAL DEPARTMENT DOCTORAL PROGRAMME IN MECHANICAL ENGINEERING LOW-COST AUGMENTED REALITY FOR INDUSTRIAL PROBLEMS Doctoral Dissertation of: The Chair of the Doctoral Program", 23 March 2013 (2013-03-23), XP055339115, Retrieved from the Internet <URL:https://www.politesi.polimi.it/bitstream/10589/74781/1/2013_03_PhD_Re.pdf> [retrieved on 20170126]**

**Description**

La présente invention se situe dans le domaine de visualisation dans l'espace 3D de données de réalité augmentée. L'invention est décrite ici dans le domaine du contrôle non destructif.

L'invention est ici présentée, à titre d'illustration et de manière non limitative, dans le domaine du contrôle non destructif avec un capteur à ultrasons. Sur la base de la description de l'invention, il apparaîtra clairement à un Homme du métier que le principe de l'invention peut s'appliquer à d'autres types de capteurs pour visualiser les données en lien avec le capteur.

Le contrôle non destructif par ultrasons est une méthode non-invasive de détection de défauts dans une pièce, basée sur l'émission d'ultrasons et la détection de leur réflexion liée aux interfaces acoustiques rencontrées.

Un capteur adapté émet des ultrasons à une fréquence (généralement entre 500 kHz et 100 MHz) choisie en fonction de la nature de la pièce à contrôler. Le capteur doit être en contact direct avec la pièce pour que les ondes propagées ne soient pas freinées par l'impédance de l'air entre le point d'émission du capteur et la pièce.

Les ondes se réfléchissent sur les interfaces acoustiques rencontrées : contours de la pièce, défauts intérieurs.

Le capteur, placé au contact de la pièce à contrôler, intercepte les ondes réémises par un défaut éventuel.

Les ondes détectées sont converties en signaux par un ensemble électronique associé du capteur. Un logiciel assemble ces signaux pour former une image de l'intérieur de la pièce. L'analyse des images permet de discriminer les échos dus à un défaut de ceux liés à la géométrie de la pièce.

Dans le domaine du contrôle non destructif, un opérateur balaie le capteur sur toute une zone d'examen préalablement définie de la pièce à contrôler. Il est impératif que toute la zone soit balayée par le capteur. L'ensemble des coordonnées du point d'émission du signal est un élément capital qui permet de vérifier que toute la zone a bien été balayée. En outre, en plus de savoir que toute la zone a été balayée, il est avantageux pour l'opérateur de détecter lors du contrôle si une zone mérite une attention particulière.

L'arrière-plan technique comprend notamment l'article de Marc Dubois intitulé "Hololens for Augmented Reality NDT" publié sur le forum ULTRASONICS le 10-30-2026, ainsi que le document DE 10 2016 003 543 A1.

Le problème technique qui se pose est celui de la visualisation des données positionnées en 3D en réalité augmentée, tout en donnant l'impression à l'utilisateur de voir à l'intérieur de la pièce. En effet, une surface 3D affichée en tant qu'hologramme semble flotter dans l'espace, même si sa position a été définie précisément par rapport au volume 3D de la pièce. Il en ressort qu'un affichage simple d'hologramme n'est pas suffisant pour donner l'impression de profondeur et permettre au cerveau d'interpréter les données comme si elles étaient à l'intérieur de la pièce.

L'invention vise à pallier tout ou partie des problèmes cités plus haut en proposant un procédé et dispositif de visualisation permettant de présenter en temps réel les données acquises, c'est-à-dire les signaux spatialisés, sous forme d'une surface 3D holographique positionnée dans le volume 3D où elles ont été acquises.

A cet effet, l'invention a pour objet un procédé de visualisation en temps réel d'un signal de contrôle non destructif d'une pièce mécanique, le signal étant émis par un dispositif de contrôle non destructif comprenant :

- un système optique de suivi de mouvement auquel un repère de référence est lié,
- un porte-capteur,
- un corps rigide,
- un capteur de contrôle non destructif solidaire du porte-capteur relié de manière fixe au corps rigide,
- un calculateur,

le procédé de visualisation étant exécuté par un dispositif de visualisation en réalité augmentée en vis-à-vis de la pièce mécanique, auquel un repère de réalité augmentée est lié,

le procédé étant caractérisé en ce qu'il comprend les étapes suivantes :

- Déplacement du capteur de contrôle non destructif sur une zone d'examen de la pièce mécanique ;
- Simultanément à l'étape de déplacement du capteur de contrôle non destructif, émission à partir d'un point d'émission selon un axe d'émission et réception du signal par le capteur ;
- Détermination, par le calculateur, d'une découpe d'une occlusion à l'intérieur de la pièce mécanique, la découpe étant centrée autour du point d'émission ;
- Détermination, par le calculateur, d'une surface de visualisation de signaux construite à partir des trajets ultrasonores du signal, cette surface étant située à l'intérieur de la découpe ;
- Visualisation, sur le dispositif de visualisation en réalité augmentée,

  - d'une vue réelle de la pièce mécanique, du porte-capteur et du capteur de contrôle non destructif,
  - d'une représentation 3D holographique de la pièce mécanique, du porte-capteur et du capteur de contrôle non destructif, superposées à la vue réelle,

■ d'une représentation holographique de la découpe de l'occlusion de la pièce et de la surface de visualisation des signaux, superposées à la vue réelle,

- l'occlusion étant réalisée au moins partiellement par une superposition de la représentation 3D holographique de la pièce mécanique (7') sur la vue réelle de la pièce mécanique (7),
- la découpe (80) de l'occlusion traversant la profondeur de la pièce mécanique dans sa représentation 3D holographique (7') jusqu'à atteindre la surface de visualisation (81) de signaux,
- la surface de visualisation (81) de signaux étant une quadrique déterminée de manière à correspondre à un maillage constitué par les trajets desdits signaux se propageant dans la pièce mécanique.

∘

Avantageusement, l'orientation de la découpe est liée à la localisation du dispositif de visualisation en réalité augmentée.

Avantageusement, la visualisation des représentations 3D holographiques est réalisée en transparence.

Avantageusement, l'étape de détermination de la surface d'intersection comprend les étapes suivantes :

- Calcul des trajets effectués par le signal émis par le capteur ;
- Réalisation d'un maillage 3D représentatif de la pièce mécanique, du porte-capteur, du capteur de contrôle non destructif, et des trajets effectués par le signal ;
- Plaquage des trajets effectués par le signal sur le maillage 3D.

Avantageusement, le procédé de visualisation selon l'invention comprend au préalable une étape de calibration du dispositif de visualisation en réalité augmentée dans le repère de référence.

Avantageusement, le procédé de visualisation selon l'invention comprend, préalablement à l'étape de calibration du dispositif de visualisation en réalité augmentée dans le repère de référence, une étape de calibration du dispositif de contrôle non destructif.

L'invention concerne aussi un dispositif de visualisation en temps réel d'un signal de contrôle non destructif d'une pièce mécanique, le dispositif comprenant un dispositif de contrôle non destructif comprenant :

- un système optique de suivi de mouvement auquel un repère de référence est lié,
- un porte-capteur,
- un premier corps rigide,
- un capteur de contrôle non destructif solidaire du porte-capteur relié de manière fixe au premier corps rigide, le capteur étant destiné à être déplacé sur une zone d'examen de la pièce mécanique, et à émettre à partir d'un point d'émission et recevoir le signal selon un axe d'émission
- un calculateur,
- le dispositif (10) comprenant en outre un dispositif de visualisation en réalité augmentée en vis-à-vis de la pièce mécanique, auquel un repère de réalité augmentée est lié,

le dispositif de contrôle non destructif étant caractérisé en ce que le calculateur est configuré pour

- Déterminer une découpe de l'occlusion de la pièce mécanique, la découpe étant centrée autour du point d'émission ;
- Déterminer une surface de visualisation de signaux construite à partir des trajets ultrasonores du signal, cette surface étant située à l'intérieur de la découpe ;

et le dispositif de visualisation en réalité augmentée est configuré pour afficher :

■ une vue réelle de la pièce mécanique, du porte-capteur et du capteur de contrôle non destructif,
■ une représentation holographique de la pièce mécanique, du porte-capteur et du capteur de contrôle non destructif, superposées à la vue réelle,
■ une représentation holographique de la découpe de l'occlusion de la pièce et de la surface de visualisation des signaux, superposées à la vue réelle.

- l'occlusion étant réalisée au moins partiellement par une superposition de la représentation 3D holographique de la pièce mécanique (7') sur la vue réelle de la pièce mécanique (7),
- la découpe (80) de l'occlusion traversant la profondeur de la pièce mécanique dans sa représentation 3D holographie (7') jusqu'à atteindre la surface de visualisation (81) de signaux,

- la surface de visualisation (81) de signaux étant une quadrique déterminée de manière à correspondre à un maillage constitué par les trajets desdits signaux se propageant dans la pièce mécanique.

Avantageusement, le dispositif de contrôle selon l'invention comprend en outre un dispositif de pointage comportant une pointe et relié de manière fixe à un second corps rigide, le dispositif de pointage étant apte à déterminer la position de points sur une surface.

L'invention concerne aussi un programme d'ordinateur comportant des instructions qui conduisent le dispositif selon l'invention à exécuter les étapes du procédé selon l'invention.

L'invention concerne aussi un support d'enregistrement lisible par un ordinateur sur lequel est enregistré ledit programme d'ordinateur.

L'invention sera mieux comprise et d'autres avantages apparaîtront à la lecture de la description détaillée d'un mode de réalisation donné à titre d'exemple, description illustrée par le dessin joint dans lequel :

la [Fig.1] représente schématiquement un dispositif de contrôle non destructif selon un mode de réalisation de l'invention ;

la [Fig.2] représente schématiquement un capteur associé à un porte-capteur d'un dispositif de contrôle non destructif selon un mode de réalisation de l'invention ;

la [Fig.3] représente schématiquement un dispositif de pointage selon un mode de réalisation de l'invention ;

la [Fig.4] représente schématiquement une pièce mécanique susceptible d'être contrôlée par le dispositif de contrôle non destructif de l'invention ;

la [Fig.5] représente schématiquement un organigramme des sous-étapes d'une étape de calibration utilisable dans l'invention ;

la [Fig.6] représente schématiquement une transformation (composée d'une translation et/ou d'une rotation) permettant de passer d'un repère $R_A$ à un repère $R_B$ ;

la [Fig.7] représente schématiquement la surface supérieure d'un bloc de calibration mis en œuvre dans le procédé de calibration selon l'invention ;

la [Fig.8] représente schématiquement le capteur, porte-capteur et premier corps rigide du dispositif de calibration selon l'invention ;

la [Fig.9] représente schématiquement la surface supérieure d'un bloc de calibration mis en œuvre dans le procédé de calibration selon l'invention pur déterminer la longueur et largeur du capteur ;

la [Fig.10] représente schématiquement un organigramme des étapes du procédé de visualisation en temps réel d'un signal de contrôle non destructif d'une pièce mécanique selon l'invention ;

la [Fig.11] illustre l'affichage obtenu dans le dispositif de visualisation en réalité augmentée avec le procédé de visualisation selon l'invention ;

la [Fig.12] représente schématiquement le QR code mis en œuvre dans l'étape de calibration du dispositif de visualisation en réalité augmentée dans le repère de référence du procédé de visualisation selon l'invention ;

la [Fig.13] représente schématiquement les matrices de transformation dans le procédé de visualisation selon l'invention ;

la [Fig.14] représente schématiquement les matrices de transformation dans le procédé de visualisation selon l'invention.

Par souci de clarté, les mêmes éléments porteront les mêmes repères dans les différentes figures. Pour une meilleure visibilité et dans un souci de compréhension accrue, les éléments ne sont pas toujours représentés à l'échelle. Le terme utilisateur, opérateur ou contrôleur est utilisé pour désigner la personne physique qui réalise le contrôle non-destructif, c'est-à-dire qui manipule et balaie le capteur (et porte-capteur) sur la pièce mécanique.

L'objet de l'invention repose sur un dispositif et procédé de visualisation qui permet à l'utilisateur de visualiser des données (signaux ultrasonores) positionnées en 3D en réalité augmentée en donnant l'impression à l'utilisateur de voir à l'intérieur de la pièce. La réalité augmentée consiste à superposer des éléments virtuels sur le monde réel. Le dispositif comprend notamment un système de positionnement optique, et un dispositif de visualisation en réalité augmentée. Et il est nécessaire de réaliser un recalage des deux environnements 3D (scène 3D réelle et représentation 3D des données) en appliquant des techniques de rendu de réalité augmentée que sont les transparences, occlusions, plans de coupe dans un évidement de matériau. L'objectif de l'invention est de permettre au contrôleur une immersion complète dans la pièce et par là-même une focalisation sur les signaux de contrôle non destructif positionnés précisément dans la géométrie.

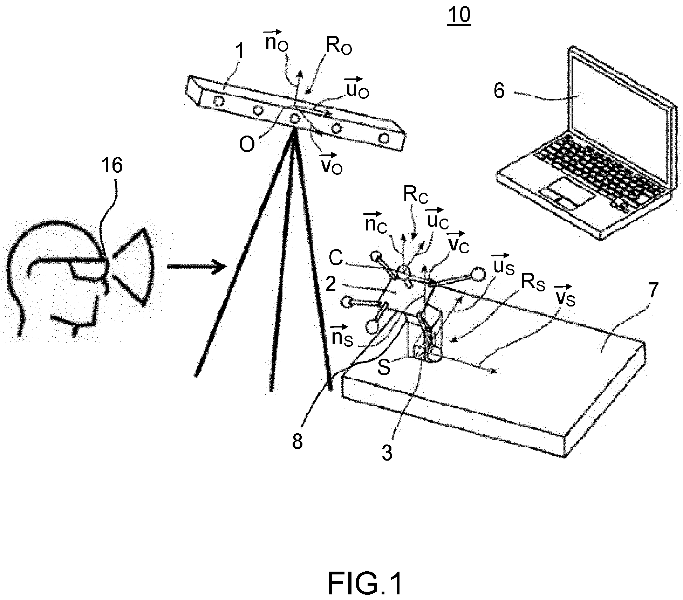

La figure 1 représente schématiquement un dispositif 10 de contrôle non destructif selon un mode de réalisation de l'invention. Le dispositif 10 de contrôle non destructif d'une pièce mécanique comprend un système optique de suivi de mouvement 1 qui a pour fonction de suivre le mouvement d'un objet dans l'espace et plus particulièrement le mouvement de corps rigides tels que décrits dans la suite.

Le système optique de suivi de mouvement 1 est associé à un repère orthonormé $R_0 = (0, \overrightarrow{u_0}, \overrightarrow{v_0}, \overrightarrow{n_0})$ où O est l'origine du repère et $\overrightarrow{u_0}, \overrightarrow{v_0}, \overrightarrow{n_0}$ sont des vecteurs normés orthogonaux entre eux.

Le système optique de suivi de mouvement 1 détermine les coordonnées cartésiennes et l'orientation d'un corps rigide dans le repère orthonormé du système optique de suivi de mouvement 1.

Le système optique de suivi de mouvement 1 comporte au moins deux caméras et un ou plusieurs émetteurs infrarouges. D'autres types de système optique sont utilisables dans le cadre de l'invention, par exemple un système optique à base de laser et/ou avec des marqueurs non volumiques de type pastille. Il est important de préciser que le système 1 peut être un système de suivi de mouvement passif (optique ou non optique).

Le dispositif 10 de contrôle non destructif comprend un premier corps rigide 2 relié à une sonde, ou capteur, 3 et un porte-capteur 8. Le capteur 3 est solidaire du porte-capteur 8 relié de manière fixe au premier corps rigide 2. Le premier corps rigide 2, le porte-capteur 8 et le capteur 3 sont reliés de manière fixe et forment un ensemble indivisible lors du contrôle non destructif. Le premier corps rigide 2 comporte au moins trois cibles sphériques réfléchissantes aux infrarouges situées à des positions distinctes. Le premier corps rigide 2 est associé à un repère orthonormé $R_C = (C, \overrightarrow{u_C}, \overrightarrow{v_C}, \overrightarrow{n_C})$ où C est l'origine du repère et $\overrightarrow{u_C}, \overrightarrow{v_C}, \overrightarrow{n_C}$ sont des vecteurs normés orthogonaux entre eux.

Dans un mode de réalisation préféré, le premier corps rigide 2 comporte six cibles sphériques. Le capteur 3 est par exemple une sonde ultra-son mono-élément. Il comporte une surface émettrice et réceptrice, dite surface active, 31. La surface active 31 est un rectangle de surface plane. En variante, le capteur 3 est d'un autre type, par exemple une sonde à courant de Foucault. De manière générale, une surface active est toute surface émettrice ou réceptrice de signaux physiques appartenant à un capteur de contrôle non destructif. Par exemple, dans le cas d'un capteur ultrasonore mono élément au contact, cela correspond à la surface du piézoélectrique. Dans le cas d'un capteur ultrasonore mono élément avec un sabot en « Plexiglas », cela correspond à la surface du sabot au travers de laquelle sont émis les signaux ultrasons.

Le dispositif 10 de contrôle comprend un dispositif de visualisation en réalité augmentée 16 en vis-à-vis de la pièce mécanique 7, auquel un repère de réalité augmentée ($R_A$) est lié. C'est à travers ce dispositif de visualisation 16 que l'opérateur voit la pièce mécanique réelle, et c'est sur ce dispositif de visualisation 16 que s'affichent les représentations 3D holographiques (détaillées ultérieurement) superposées à la vue de la pièce mécanique sur le dispositif de visualisation 16.

Ces représentations 3D holographiques peuvent former des occlusions de la pièce mécanique 7 dans le sens où elles sont superposées totalement ou partiellement à la pièce mécanique 7 réelle. En particulier, une représentation 3D holographique de la pièce mécanique peut être superposée à la pièce mécanique 7 réelle et ainsi former une occlusion.

Une occlusion peut être constituée de l'enveloppe des représentations virtuelles de la pièce mécanique à contrôler et/ou du capteur et/ou du porte-capteur

Il est possible d'ajouter des informations sur l'occlusion telles que des zones de couverture ou des soudures et aussi de découper cette occlusion afin de faire apparaitre des signaux.

Le dispositif 10 de contrôle comprend un calculateur 6 configuré pour

a. déterminer une découpe de l'occlusion de la représentation holographique de la pièce mécanique 7, la découpe étant centrée autour du point d'émission ;

b. déterminer une surface de projection (ou visualisation) des signaux construite à partir des trajets ultrasonores des signaux ultrasonores délivrés par le capteur 3. Cette surface correspond à l'intersection du plan contenant l'axe d'émission dans la découpe de l'occlusion. Autrement dit, la surface de visualisation des signaux est une quadrique, ou surface quadratique, calculée de manière à correspondre au mieux au maillage constitué par les trajets ultrasonore.

Le terme occlusion signifie cacher des objets réels derrière des objets virtuels. L'occlusion se produit lorsqu'un objet dans un espace 3D bloque la vue d'un autre objet. En réalité augmentée, les objets générés par ordinateur sont placés dans une scène réelle pour fournir des informations supplémentaires ou modifier la nature des objets réels. Ainsi, les objets virtuels et la scène réelle doivent être parfaitement alignés afin de maintenir des niveaux élevés de réalisme et permettre aux objets de se comporter comme ils le feraient dans des conditions normales. En particulier, dans le contexte de l'invention, une représentation holographique de la pièce mécanique 7 est superposée à la pièce réelle 7 et constitue ainsi une occlusion totale ou partielle.

La découpe de l'occlusion correspond à une intersection entre une surface 3D, par exemple un ellipsoïde, et la surface de visualisation des signaux.

Le calculateur 6 permet notamment d'assembler les signaux reçus par le capteur pour former une image de l'intérieur de la pièce.

Et le dispositif de visualisation 16 en réalité augmentée est configuré pour afficher :

a. une vue réelle de la pièce mécanique 7, du porte-capteur 8 et du capteur de contrôle non destructif 3,
b. une représentation holographique sous formes d'occlusions de la pièce mécanique 7', du porte-capteur 8' et du capteur de contrôle non destructif 3', superposées à la vue réelle,
c. une représentation holographique de la découpe de l'occlusion de la pièce et de la surface de visualisation des signaux, superposées à la vue réelle.

Le dispositif 10 de contrôle peut être calibré selon un procédé connu par l'Homme du métier, par exemple comme divulgué dans le document FR 3 087 254 B1. Dans ce qui suit, et à titre d'exemple et de manière non limitative de l'invention, la calibration du dispositif 10 de contrôle est réalisée selon un autre procédé.

Le dispositif 10 de contrôle peut comprendre un bloc de calibration et, dans notre exemple de calibration, le calculateur peut être configuré pour réaliser les étapes suivantes qui seront explicitées ci-dessous :

- déterminer, à partir de trois points sur une surface plane supérieure du bloc de calibration, la longueur et la largeur du bloc de calibration ;

- déterminer une première matrice de transformation du repère de référence ($R_0$) vers un repère du bloc ($R_B$) lié au bloc de calibration ;

- déterminer, à partir de trois points sur le premier corps rigide (2), la longueur et la largeur du capteur lorsqu'il est disposé sur la surface plane supérieure du bloc de calibration ;

- déterminer une deuxième matrice de transformation permettant de passer d'un repère ($R_H$) lié au porte-capteur à un repère ($R_S$) lié au capteur.

Le calculateur est en outre configuré pour déterminer une troisième matrice de transformation permettant de passer du repère de référence ($R_0$) au repère ($R_S$) lié au capteur.

L'invention est décrite pour le suivi d'un capteur, mais elle s'applique également au suivi de plusieurs capteurs, simultanément et de manière indépendante.

Le dispositif de contrôle non destructif comprend un calculateur 6 relié au système optique de suivi de mouvement 1 et à un module de commande 5. Le calculateur 6 est par exemple un ordinateur ou une carte électronique. Il comporte notamment un processeur exécutant un programme d'ordinateur mettant en œuvre le procédé qui va être décrit et une mémoire pour en mémoriser les résultats. Il comporte aussi des interfaces d'entrée et de sortie et peut être associé à un écran de visualisation.

La liaison entre le calculateur 6 et le système optique de suivi de mouvement 1 peut être filaire ou sans fil. De même, la liaison entre le calculateur 6 et le module de commande 5 peut être filaire ou sans fil.

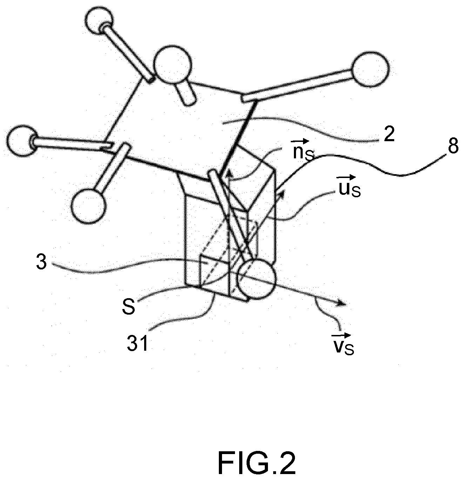

La figure 2 représente schématiquement un capteur 3 associé à un porte-capteur 8 d'un dispositif 10 de contrôle non destructif selon un mode de réalisation de l'invention. Le capteur de contrôle non destructif 3 est solidaire du porte-capteur 8 relié de manière fixe au premier corps rigide 2. Plus précisément, le capteur est inséré dans un porte-capteur, lequel est solidaire d'un corps rigide permettant de le localiser dans le repère du système de positionnement optique. La surface inférieure du capteur s'étend sensiblement dans le même plan que la surface inférieure du porte-capteur.

Avantageusement, le dispositif de contrôle non destructif comprend un dispositif de pointage 4.

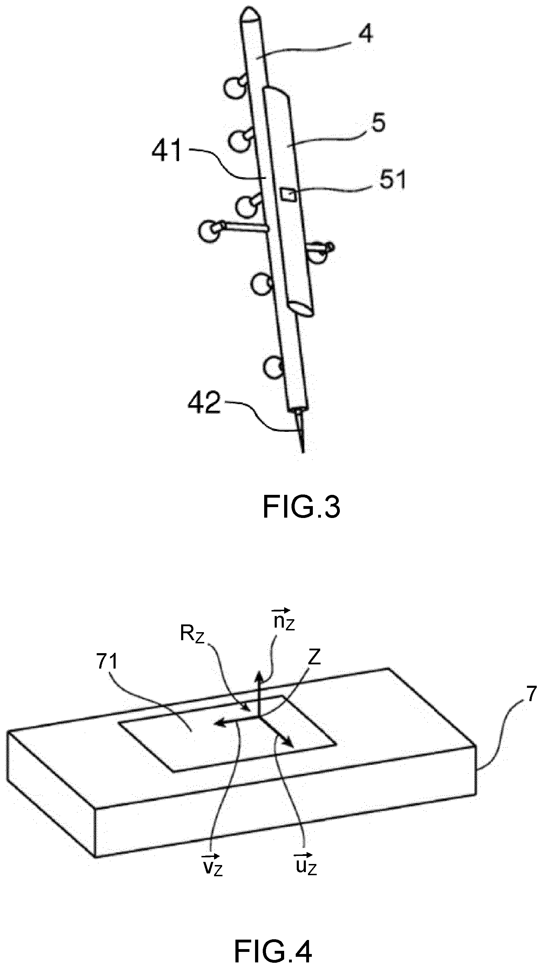

La figure 3 représente schématiquement un dispositif de pointage 4 selon un mode de réalisation de l'invention. Le dispositif de pointage 4 comporte un second corps rigide 41 et une pointe de précision 42. Le second corps rigide 41 comporte au moins trois cibles sphériques réfléchissantes aux infrarouges situées à des positions distinctes. La forme du second corps rigide 41, c'est-à-dire le positionnement exact des sphères les unes par rapport aux autres, est connu à l'avance. Le second corps rigide 41 et la pointe de précision 42 sont reliés de manière fixe et forment un ensemble indivisible. L'origine du second corps rigide 41 a été préalablement configurée pour correspondre à la pointe 42. Ainsi, l'origine du second corps rigide 41 qui sera mesurée par le système optique de suivi de mouvement 1 comme exposé dans la suite correspond exactement au point physique pointé avec le dispositif de pointage.

Dans un mode de réalisation préféré, le second corps rigide 41 comporte sept cibles sphériques.

Le dispositif de contrôle non destructif comporte un module de commande 5 muni d'au moins un bouton d'actionnement 51. De préférence le module de commande 5 est monté sur le dispositif de pointage 4 pour en faciliter l'utilisation.

La figure 4 représente schématiquement une pièce mécanique 7 susceptible d'être contrôlée par le dispositif de contrôle non destructif de l'invention. La pièce mécanique à contrôler 7 comporte une zone d'examen 71 définie sur la surface de la pièce mécanique 7. La zone d'examen 71 s'étend sur tout ou partie de la pièce mécanique. La zone d'examen est sur une partie de la pièce mécanique qui a une surface de forme géométrique connue, telle qu'une surface plane, une surface cylindrique ou encore une surface conique, par exemple. Dans tous les cas, la forme géométrique de la zone d'examen peut être représentée par une fonction analytique. Alternativement, il est aussi possible de travailler à partir d'un maillage de la pièce issu par exemple d'un logiciel de CAO (abréviation de conception assistée par ordinateur).

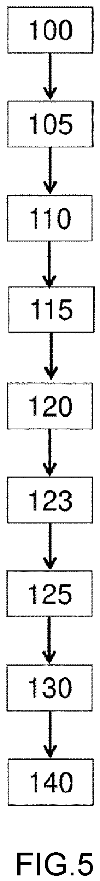

La figure 5 représente schématiquement un organigramme des sous-étapes d'une étape de calibration utilisable dans l'invention. Dans ce qui suit, nous utiliserons les lettres suivantes :

- R pour qualifier un repère
- C pour qualifier le centre (ou origine) d'un repère
- I, J et K pour qualifier les vecteurs unitaires d'un repère respectivement suivant les axes x, y et z de ce même repère
- P ou Q pour qualifier un point
- V pour qualifier un vecteur
- T pour qualifier une matrice de transformation
- L pour qualifier une longueur
- W pour qualifier une largeur
- O pour qualifier le système de positionnement optique et le repère monde associé
- B pour qualifier le bloc de calibration et le repère bloc associé
- H pour qualifier le porte-capteur et le repère porte-capteur associé
- S pour qualifier le capteur et le repère capteur associé

Pour exprimer un vecteur $\overrightarrow{V_1}$ dans le repère $R_A$, la notation $\overrightarrow{AV_1}$ est utilisée. A noter qu'un vecteur sert aussi bien à exprimer une position qu'un déplacement.

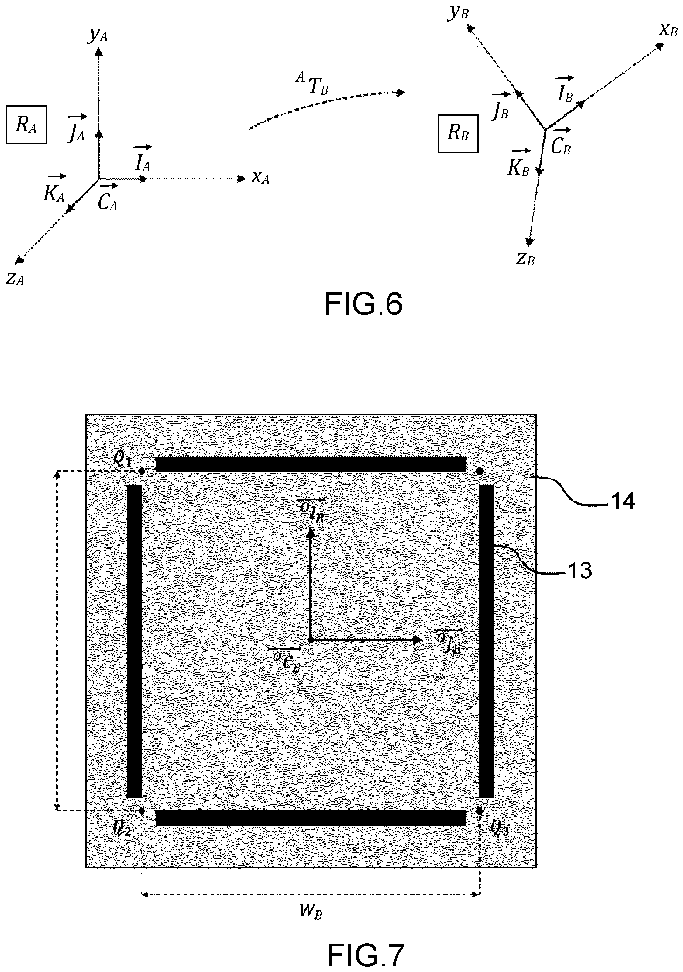

La transformation (composée d'une translation et/ou d'une rotation) permettant de passer d'un repère $R_A$ à un repère $R_B$ est définie par la matrice de transformation $^AT_B$. La figure 6 représente schématiquement une telle transformation.

Cette matrice de transformation de dimensions $4\times4$ se compose comme suit :

$$^AT_B = \begin{bmatrix} \overrightarrow{AI_B} & \overrightarrow{AJ_B} & \overrightarrow{AK_B} & \overrightarrow{AC_B} \\ 0 & 0 & 0 & 1 \end{bmatrix} = \begin{bmatrix} ^AI_{x_B} & ^AJ_{x_B} & ^AK_{x_B} & ^AC_{x_B} \\ ^AI_{y_B} & ^AJ_{y_B} & ^AK_{y_B} & ^AC_{y_B} \\ ^AI_{z_B} & ^AJ_{z_B} & ^AK_{z_B} & ^AC_{z_B} \\ 0 & 0 & 0 & 1 \end{bmatrix}$$

$\overrightarrow{AI_B}$, $\overrightarrow{AJ_B}$ et $\overrightarrow{AK_B}$ désignent respectivement les vecteurs unitaires suivant les axes $x_B$, $y_B$ et $z_B$ du repère $R_B$ et exprimés dans le repère $R_A$.

$\overrightarrow{AC_B}$ est le vecteur exprimant l'origine du repère $R_B$ dans le repère $R_A$.

Le système de suivi de mouvement 1 est capable de repérer dans l'espace des corps rigides 2, 41. Un corps rigide est une collection non déformable de marqueurs sphériques reflétant les rayons infrarouges et ainsi repérables par le système de positionnement optique. Après calibration, le système de suivi de mouvement peut associer à un corps rigide un repère origine qui sert à qualifier la position et l'orientation de corps rigides dans le repère du système de suivi de mouvement.

Il faut noter qu'afin d'être correctement repérés, les corps rigides doivent se situer dans l'angle solide vu par le système de suivi de mouvement.

Notamment, le système de suivi de mouvement est fourni avec un outil calibré en usine permettant d'obtenir les coordonnées d'un point de l'espace dans le repère dudit système de suivi de mouvement. Dans la suite, cet outil est dénommé second corps rigide 41.

Deux corps rigides différents sont utilisés dans le procédé de calibration de l'invention : le second corps rigide 41 précédemment décrit et le premier corps rigide 2 servant à repérer le porte-capteur 8. C'est ce dernier premier corps rigide 2 qui fait l'objet de la procédure de calibration décrite dans cette étape de calibration. Le but de cette étape de calibration est de pouvoir déterminer rapidement, simplement et avec précision la transformation géométrique (rotation et/ou translation) existant entre l'origine du premier corps rigide 2 telle que repérée par le système de suivi de mouvement et le point d'émission des ultrasons par le capteur 3, indépendamment du porte-capteur utilisé. En d'autres termes, cette calibration permet de déterminer la transformation géométrique, sous forme de matrice de transformation, entre l'origine du premier corps rigide 2 et un point du capteur quelle que soit la forme du porte-capteur nécessairement disposé entre ces deux éléments.

Le dispositif 10 de contrôle selon l'invention comprend :

- un système optique de suivi de mouvement 1 auquel un repère de référence (R0) est lié,
- un porte-capteur 8,
- un premier corps rigide 2,
- un capteur de contrôle non destructif 3 solidaire du porte-capteur 8 relié de manière fixe au premier corps rigide 2,
- un calculateur 6,
- un dispositif de visualisation en réalité augmentée 16 en vis-à-vis de la pièce mécanique 7, auquel un repère de réalité augmentée ($R_A$) est lié.

Préalablement à l'étape de calibration du dispositif de visualisation en réalité augmentée 16 (détaillée ci-après) dans le repère de référence (R0), le procédé de visualisation de l'invention peut comprendre une étape 1000 de calibration du dispositif de contrôle non destructif. L'étape 1000 de calibration d'un dispositif de contrôle non destructif d'une pièce mécanique 7 peut comprendre, à titre d'exemple, les étapes suivantes :

- détermination (100), à partir de trois points sur une surface plane supérieure d'un bloc de calibration 14, de la longueur et la largeur du bloc de calibration ;
- détermination (110) d'une première matrice de transformation du repère de référence ($R_0$) vers un repère du bloc ($R_B$) lié au bloc de calibration ;
- disposition (115) du capteur 3 sur la surface plane supérieure du bloc de calibration 14 ;
- détermination (120), à partir de trois points sur le premier corps rigide (2), de la longueur et la largeur du capteur 3 ;
- détermination (130) d'une deuxième matrice de transformation permettant de passer d'un repère ($R_H$) lié au porte-capteur à un repère ($R_S$) lié au capteur.

Il est rappelé que l'étape de calibration est compatible du procédé de visualisation détaillé par la suite. Toutefois, une autre étape de calibration peut être mise en œuvre à la place de l'étape 1000.

Avantageusement, l'étape de calibration peut comprendre en outre une étape 140 de détermination d'une troisième matrice de transformation permettant de passer du repère de référence ($R_0$) au repère ($R_S$) lié au capteur. La troisième matrice de transformation est obtenue par multiplication de la deuxième matrice de transformation avec la première matrice de transformation.

Le but des étapes 100 et 110 est de calibrer le bloc de calibration 14 lui-même, c'est-à-dire de déterminer ses dimensions (longueur et largeur) et de lui associer un repère $R_B$ lié au bloc de calibration. Le système de suivi de mouvement et le bloc de calibration doivent être fermement fixés afin d'éviter toute modification de leurs positions et orientations relatives. Alors, un opérateur utilise le système de suivi de mouvement et le second corps rigide 41 afin d'acquérir trois positions à la surface du bloc de calibration 14. Ces trois positions $Q_1$, $Q_2$ et $Q_3$ sont préalablement marquées, avantageusement mais pas obligatoirement, par de petits trous créés à cet effet à la surface supérieure plane du bloc de calibration 14, comme indiqué sur la figure 7. Avantageusement, ces trois positions sont situées à trois sommets d'un rectangle délimité par les bloqueurs 13.

La figure 7 représente schématiquement la surface supérieure d'un bloc de calibration mis en œuvre dans l'étape de calibration selon l'invention. Le bloc de calibration est une pièce présentant une surface supérieure plane sur laquelle une zone a été délimitée par des bloqueurs 13. Les dimensions de cette zone, de forme rectangulaire, sont connues précisément. Comme cela apparaitra clairement par la suite, les bloqueurs 13 servent de butée pour bien positionner l'ensemble capteur et porte-capteur au niveau d'un sommet, préférentiellement angle droit, de la zone.

L'étape de calibration peut comprendre, préalablement à l'étape 110 de détermination de la première matrice de transformation du repère de référence $R_0$ vers un repère du bloc $R_B$ lié au bloc de calibration, une étape 105 de détermination du repère du bloc $R_B$ lié au bloc de calibration dans le repère de référence $R_0$.

Plus précisément, le calculateur 6 reçoit en entrée trois vecteurs :

- Vecteur définissant la première position dans le repère de référence $R_O$ : $\overrightarrow{OQ_1}$

- Vecteur définissant la deuxième position dans le repère de référence $R_O$ : $\overrightarrow{OQ_2}$

- Vecteur définissant la troisième position dans le repère de référence $R_O$ : $\overrightarrow{OQ_3}$

Le calculateur 6 calcule les données suivantes :

- Longueur du bloc : $L_B$

- Largeur du *bloc : $W_B$*

- Matrice de transformation permettant de passer du repère de référence $R_O$ au repère bloc $R_B$ : $^OT_B$

Les étapes de calcul sont détaillées ci-après.

Le vecteur définissant le centre du bloc de calibration dans le repère de référence $R_O$ est calculé :

$$\overrightarrow{^OC_B} = \frac{\overrightarrow{^OQ_1} + \overrightarrow{^OQ_3}}{2}$$

Le vecteur définissant la longueur du bloc de calibration dans le repère monde $R_O$ est calculé :

$$\overrightarrow{^OL_B} = \overrightarrow{^OQ_1} - \overrightarrow{^OQ_2}$$

Le vecteur définissant la largeur du bloc de calibration dans le repère monde $R_O$ est calculé :

$$\overrightarrow{^OW_B} = \overrightarrow{^OQ_3} - \overrightarrow{^OQ_2}$$

La longueur du bloc de calibration peut ainsi être calculée :

$$L_B = \left\| \overrightarrow{^OL_B} \right\|$$

La largeur du bloc de calibration peut également être calculée :

$$W_B = \left\| \overrightarrow{^OW_B} \right\|$$

A partir de ces données, il est possible de calculer les trois vecteurs unitaires du repère bloc $R_B$ dans le repère de référence $R_O$ :

$$[0092]\ \overrightarrow{^OI_B} = \frac{\overrightarrow{^OL_B}}{L_B}$$

$$\overrightarrow{^OJ_B} = \frac{\overrightarrow{^OW_B}}{W_B}$$

$$\overrightarrow{^OK_B} = \overrightarrow{^OI_B} \wedge \overrightarrow{^OJ_B}$$

Enfin, la matrice de transformation permettant de passer du repère de référence $R_O$ au repère bloc $R_B$ est calculée :

$$^{O}T_B = \begin{bmatrix} \overrightarrow{^{O}I_B} & \overrightarrow{^{O}J_B} & \overrightarrow{^{O}K_B} & \overrightarrow{^{O}C_B} \\ 0 & 0 & 0 & 1 \end{bmatrix}$$

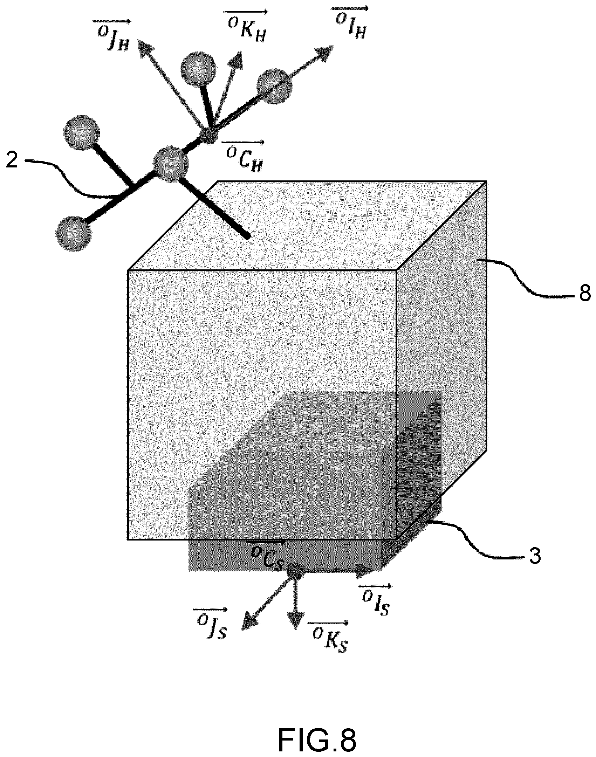

Le but des étapes 120 et 130 est de déterminer les dimensions du capteur (longueur et largeur), ainsi que la matrice de transformation entre le premier corps rigide situé sur le porte-capteur et le centre du capteur, comme indiqué sur la figure 8, qui représente schématiquement le capteur, porte-capteur et premier corps rigide du dispositif de calibration selon l'invention.

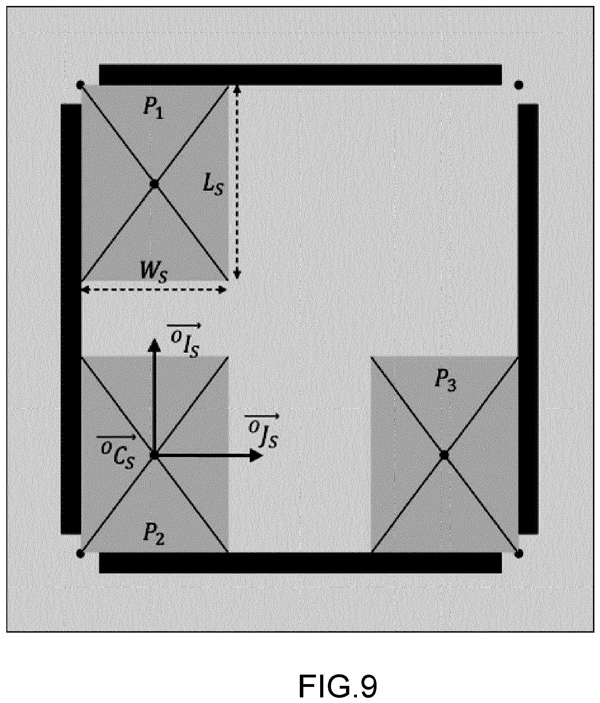

La figure 9 représente schématiquement la surface supérieure d'un bloc de calibration mis en œuvre dans l'étape de calibration pour déterminer la longueur et largeur du capteur.

Pour la réalisation des étapes 120 et 130, le capteur 3 est disposé (étape 115) sur la surface plane supérieure du bloc de calibration 14. L'opérateur acquiert trois positions du premier corps rigide présent sur le porte-capteur, comme visible sur la figure 9. Ces trois positions $P_1$, $P_2$ et $P_3$ correspondent respectivement aux coins supérieur-gauche, inférieur-gauche et inférieur-droit. A noter qu'il est possible de choisir une combinaison de coins différente de celle-ci.

Notons que le porte-capteur est conçu de telle manière à ce que ce soit le capteur lui-même et non le porte-capteur qui vienne au contact des bordures (bloqueurs) du bloc de calibration lorsque le porte-capteur est amené aux positions $P_1$, $P_2$ et $P_3$.

En plus des données précédemment disponibles, le calculateur 6 reçoit en entrée trois vecteurs :

- Vecteur définissant la première position dans le repère de référence $R_O$ : $\overrightarrow{OP_1}$

- Vecteur définissant la deuxième position dans le repère de référence $R_O$ : $\overrightarrow{OP_2}$

- Vecteur définissant la troisième position dans le repère de référence $R_O$ : $\overrightarrow{OP_3}$

Le calculateur 6 calcule les données suivantes :

- Longueur du capteur : $L_S$
- Largeur du capteur : $W_S$
- Matrice de transformation permettant de passer du repère porte-capteur $R_H$ au repère capteur $R_S$ : $^{H}T_S$

Les étapes de calcul sont détaillées ci-après.

Les vecteurs suivants sont calculés :

$$\overrightarrow{^{O}P_{21}} = \overrightarrow{^{O}P_1} - \overrightarrow{^{O}P_2}$$

$$\overrightarrow{^{O}P_{23}} = \overrightarrow{^{O}P_3} - \overrightarrow{^{O}P_2}$$

La longueur du capteur est calculée :

$$L_S = L_B - \left\| \overrightarrow{^{O}P_{21}} \right\|$$

La largeur du capteur est calculée :

$$W_S = W_B - \left\| \overrightarrow{^{O}P_{23}} \right\|$$

Enfin, les trois vecteurs unitaires du repère capteur $R_S$ dans le repère de référence $R_O$ sont calculés :

$$\overrightarrow{^{O}I_S} = \overrightarrow{^{O}I_B}$$

$$\overrightarrow{{}^{O}J_S} = \overrightarrow{{}^{O}J_B}$$

$$\overrightarrow{{}^{O}K_S} = \overrightarrow{{}^{O}K_B}$$

Il est alors possible de calculer la matrice de transformation permettant de passer du repère porte-capteur $R_H$ au repère de référence $R_O$, le porte-capteur étant en $P_3$ :

$$^{O}T_H = \begin{bmatrix} \overrightarrow{{}^{O}I_S} & \overrightarrow{{}^{O}J_S} & \overrightarrow{{}^{O}K_S} & \overrightarrow{{}^{O}P_3} \\ 0 & 0 & 0 & 1 \end{bmatrix}$$

$$^{H}T_O = \left( {}^{O}T_H \right)^{-1}$$

En d'autres termes, l'étape de calibration détaillée ici comprend, préalablement à l'étape 125 de détermination du repère $R_S$ lié au capteur dans le repère $R_H$ lié au porte-capteur, une étape 123 de détermination d'une quatrième matrice de transformation permettant de passer du repère $R_H$ lié au porte-capteur au repère de référence $R_0$.

L'étape suivante consiste à calculer les coordonnées du centre du capteur dans le repère de référence $R_O$ (le calcul est fait pour le porte-capteur en $P_3$) :

$$\overrightarrow{{}^{O}C_S} = \overrightarrow{{}^{O}Q_3} - \left( \frac{L_S \times \overrightarrow{{}^{O}I_S}}{2} \right) - \left( \frac{W_S \times \overrightarrow{{}^{O}J_S}}{2} \right)$$

Il convient aussi de calculer les trois vecteurs unitaires du repère capteur $R_S$ dans le repère porte-capteur $R_H$ :

$$\overrightarrow{{}^{H}I_S} = {}^{H}T_O \times \overrightarrow{{}^{O}I_S}$$

$$\overrightarrow{{}^{H}J_S} = {}^{H}T_O \times \overrightarrow{{}^{O}J_S}$$

$$\overrightarrow{{}^{H}K_S} = \overrightarrow{{}^{H}I_S} \wedge \overrightarrow{{}^{H}J_S}$$

Enfin, on calcule le centre du repère capteur $R_S$ dans le repère porte-capteur $R_H$ :

$$\overrightarrow{{}^{H}C_S} = {}^{H}T_O \times \overrightarrow{{}^{O}C_S}$$

Autrement dit, l'étape de calibration comprend, préalablement à l'étape 130 de détermination de la deuxième matrice de transformation permettant de passer d'un repère $R_H$ lié au porte-capteur à un repère $R_S$ lié au capteur, une étape 125 de détermination du repère $R_S$ lié au capteur dans le repère $R_H$ lié au porte-capteur.

Pour finir, on peut calculer la matrice de transformation permettant de passer du repère porte-capteur $R_H$ au repère capteur $R_S$ :

$$^{H}T_S = \begin{bmatrix} \overrightarrow{{}^{H}I_S} & \overrightarrow{{}^{H}J_S} & \overrightarrow{{}^{H}K_S} & \overrightarrow{{}^{H}C_S} \\ 0 & 0 & 0 & 1 \end{bmatrix}$$

Pour rappel, cette étape de calibration est donnée à titre indicatif. D'autres calibrations sont également compatibles du procédé de visualisation détaillé ci-après. Dans ce qui vient d'être décrit, la calibration du porte-capteur peut être effectuée directement en utilisant un outil permettant de relever les positions de différents points caractéristiques. L'utilisation du bloc de calibration calibré permet naturellement d'intégrer une contrainte de coplanarité qui augmente la précision de la calibration. C'est la combinaison de la calibration du bloc de calibration et du capteur qui confère un aspect particulièrement intéressant à ce procédé de calibration. Il en résulte une grande simplicité et rapidité de mise en œuvre ainsi qu'une amélioration significative de la précision de la calibration par rapport à une méthode classique.

Après cette étape préalable de calibration du dispositif 10 de contrôle non destructif, le cœur de l'invention portant sur l'affichage des données est détaillé ci-dessous.

L'objet de l'invention réside dans le fait de visualiser en réalité augmentée les signaux directement à l'intérieur de la pièce mécanique dans le domaine du contrôle non destructif. Pour ce faire, l'invention se base sur deux aspects. D'une part, les éléments de la scène doivent être présentés sous forme d'occlusions holographiques afin que le cerveau puisse interpréter correctement la position et la profondeur de la surface 3D holographique à l'intérieur de la pièce. Et d'autre part, une découpe est réalisée au sein de l'occlusion afin de permettre la visualisation de cette surface 3D holographique. L'orientation de cette découpe est liée à la position relative de l'opérateur. Plus précisément, l'orientation de la découpe 80 est liée à la localisation du dispositif de visualisation en réalité augmentée. Ainsi, cette découpe et la surface de visualisation de signaux construite à partir des trajets ultrasonores font face au dispositif de visualisation en réalité augmentée et donc aux yeux de l'opérateur. L'avantage majeur de l'invention est de permettre à l'utilisateur de comprendre le positionnement des signaux à l'intérieur de la pièce et de réaliser une visualisation en temps réel de données spatialisées en réalité augmentée.

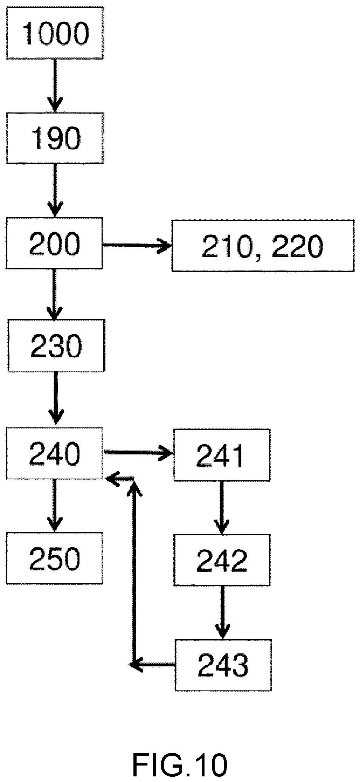

La figure 10 représente schématiquement un organigramme des étapes du procédé de visualisation en temps réel d'un signal de contrôle non destructif d'une pièce mécanique selon l'invention. Le signal est émis par le dispositif 10 de contrôle non destructif décrit précédemment. Selon l'invention, le procédé de visualisation comprend les étapes suivantes :

- Déplacement (étape 200) du capteur de contrôle non destructif 3 sur une zone d'examen de la pièce mécanique 7 ;
- Simultanément à l'étape 200 de déplacement du capteur de contrôle non destructif 3, émission (étape 210) à partir d'un point d'émission F selon un axe d'émission et réception (étape 220) du signal par le capteur 3 ;
- Détermination (étape 230) d'une découpe 80 d'une occlusion à l'intérieur de la pièce mécanique 7, la découpe 80 étant centrée autour du point d'émission F ;
- Détermination (étape 240) d'une surface 81 de visualisation de signaux construite à partir des trajets ultrasonores du signal, cette surface étant située à l'intérieur de la découpe 80 ;
- Visualisation (étape 250), sur le dispositif de visualisation en réalité augmentée 16,

  ○ d'une vue réelle de la pièce mécanique 7, du porte-capteur 8 et du capteur de contrôle non destructif 3,
  ○ d'une représentation 3D holographique de la pièce mécanique 7', du porte-capteur 8' et du capteur de contrôle non destructif 3', superposées à la vue réelle,
  ○ d'une représentation holographique de la découpe 80 de l'occlusion de la pièce et de la surface 81 de visualisation des signaux, superposées à la vue réelle.

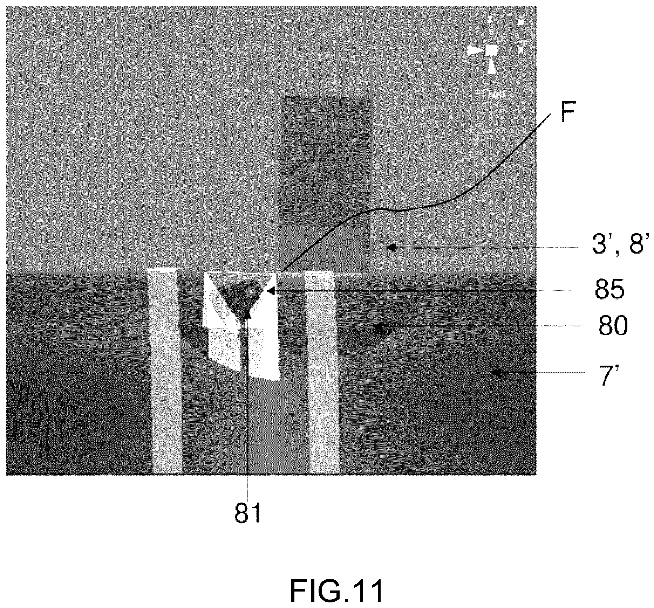

La figure 11 illustre l'affichage obtenu dans le dispositif de visualisation en réalité augmentée avec le procédé de visualisation selon l'invention. La découpe 80 correspond à une surface 3D de forme sensiblement semi-hémisphérique ou ellipsoïde. Autrement dit, la découpe 80 est une représentation d'une portion d'un volume dans la pièce mécanique 7, autour du point F. La référence 85 représente une soudure dans la pièce mécanique 7.

La découpe 80 est une surface 3D qui traverse la profondeur de l'occlusion jusqu'à atteindre une surface d'acquisition des trajets ultrasonores qui correspond à une surface 81 de visualisation des signaux ultrasonores. Ainsi, la découpe de l'occlusion correspond à l'intersection entre la surface 3D et la surface de visualisation.

Par exemple, la découpe 80 est réalisée dans la représentation 3D holographique de la pièce mécanique 7' comme cela est illustré à la figure 11 dans le cas où l'occlusion est due au moins partiellement à la superposition de la représentation 3D holographique et de la vue réelle de la pièce mécanique.

La découpe 80 est prédéterminée de sorte à ce que l'opérateur puisse visualiser les trajets des signaux ultrasonores à l'intérieur de la pièce mécanique dans sa représentation holographique 3D 7', c'est-à-dire à l'intérieur de cette découpe 80 dans la pièce. Notamment, la position de l'ellipsoïde est centrée sur un point du capteur choisi comme référence. La rotation et les dimensions de l'ellipsoïde sont calculées en fonction de la position de l'opérateur par rapport au capteur et à la pièce, afin de permettre la visualisation de l'ensemble des signaux par ce même opérateur.

Ainsi, le procédé de visualisation permet d'obtenir un affichage dans le dispositif de visualisation en réalité augmentée 16. L'opérateur y voit, à travers le dispositif de visualisation 16, la pièce mécanique 7, le porte-capteur 8 et le capteur 3. En plus de ces objets réels, l'affichage comprend une représentation 3D holographique 7' de la pièce mécanique, une représentation 3D holographique 8' du porte-capteur, et une représentation 3D holographique 3' du capteur. Ces trois représentations 3D holographiques sont superposées à l'affichage des objets réels. En plus des objets réels et de ces représentations 3D holographiques superposées aux objets réels, l'affichage comprend la représentation 3D holographique de la découpe de l'occlusion 80 et de la surface d'intersection 81 ou surface de visualisation des signaux ultrasonores, superposées aux représentations 3D holographiques superposées aux objets réels. Cette surface correspond à une quadrique calculée au plus proche du maillage constitué par les trajets ultrasonores.

Dans la suite du document, nous ferons référence aux repères suivants :

- Repère du système de visualisation en réalité augmentée sous la dénomination repère RA : $R_{RA}$.
- Repère de la cible sous la dénomination repère QRCode : $R_{QR}$.

Le procédé de visualisation selon l'invention comprend au préalable une étape 190 de calibration du dispositif de visualisation en réalité augmentée 16 dans le repère de référence ($R_0$).

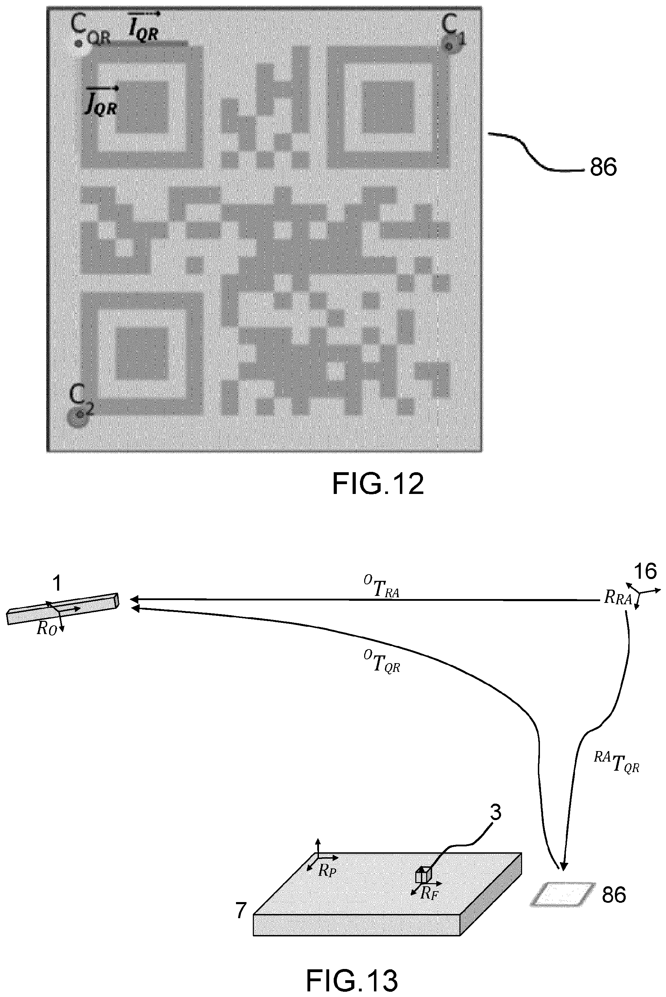

La figure 12 représente schématiquement le QR code mis en œuvre dans l'étape 190 de calibration du dispositif de visualisation en réalité augmentée dans le repère de référence du procédé de visualisation selon l'invention Afin de définir la position des éléments connus dans le repère monde dans le repère du dispositif de visualisation en réalité augmentée, il faut calibrer le dispositif de visualisation en réalité augmentée. Le dispositif de visualisation en réalité augmentée établit une ancre, soit un repère à l'emplacement du QR code. Lors de la calibration, ce repère est positionné dans le repère monde, défini par le système de positionnement optique. La calibration permet d'établir la relation entre les deux mondes.

Dans le monde du dispositif de visualisation en réalité augmentée, le repère $R_{QR}$ associé au QR Code 86 est défini comme le montre la figure 12. Pour calibrer ce repère $R_{QR}$ dans le repère monde, les trois positions $C_{QR}$, $C_1$ et $C_2$ dans le repère monde sont acquises. Ensuite, le QR Code 86 est acquis par le dispositif de visualisation en réalité augmentée et une transformation interne ${}^{QR}T_{RA}$ est réalisée qui, combinée à la matrice ${}^{O}T_{QR}$, permet le positionnement dans le repère RA de l'ensemble des éléments positionnés et traqués dans le repère monde. De manière similaire à ce qui a été détaillé précédemment pour l'étape de calibration 1000, nous avons ici les relations suivantes :

$$
{}^{O}T_{QR} = \begin{bmatrix} \overrightarrow{{}^{O}I_{QR}} & \overrightarrow{{}^{O}J_{QR}} & \overrightarrow{{}^{O}K_{QR}} & \overrightarrow{{}^{O}C_{QR}} \\ 0 & 0 & 0 & 1 \end{bmatrix}
$$

Le vecteur $\overrightarrow{OI_{QR}}$ dans le repère monde est :

$$
\overrightarrow{{}^{O}I_{QR}} = \frac{\overrightarrow{C_{QR}C_1}}{\left\| \overrightarrow{C_{QR}C_1} \right\|}
$$

Le vecteur $\overrightarrow{OJ_{QR}}$ dans le repère monde est :

$$
\overrightarrow{{}^{O}J_{QR}} = \frac{\overrightarrow{C_{QR}C_2}}{\left\| \overrightarrow{C_{QR}C_2} \right\|}
$$

Le vecteur $\overrightarrow{OK_{QR}}$ dans le repère monde est :

$$
\overrightarrow{{}^{O}K_{QR}} = \overrightarrow{{}^{O}I_{QR}} \wedge \overrightarrow{{}^{O}J_{QR}}
$$

La figure 13 représente schématiquement les matrices de transformation dans le procédé de visualisation selon l'invention.

L'étape de calibration 1000 définit et décrit la façon d'obtenir par calibration les matrices de transformation suivantes :

- la matrice de transformation permettant de passer du repère capteur $R_F$ au repère monde $R_O$ : ${}^{F}T_O$. Par inversion de cette matrice, on a aussi ${}^{O}T_F$ ;

- la matrice de transformation permettant de passer du repère pièce $R_P$ au repère monde $R_O$ : ${}^{P}T_O$. Par inversion de cette matrice, on a aussi ${}^{O}T_P$.

- la matrice de transformation permettant de passer du repère RA $R_{RA}$ au repère monde $R_O$ : ${}^{RA}T_O$. Par inversion de cette matrice, on a aussi $^{O}T_{RA}$.

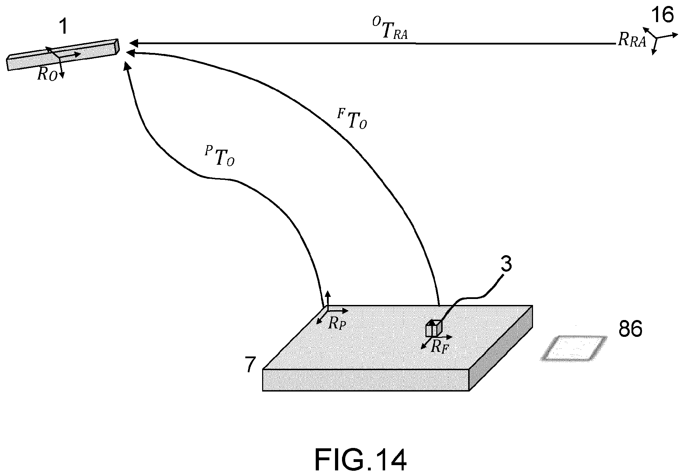

La figure 14 représente schématiquement ces matrices de transformation dans le procédé de visualisation selon l'invention.

Nous pouvons positionner l'origine F du capteur 3 dans le repère pièce $R_P$ :

$$ ^{P}P_F = {}^{P}T_O\left( {}^{O}P_F \right) $$

Les informations $I$ liées spatialement à ce point F telles que les trajets ultrasonores et le scan sectoriel reconstruit à partir de ceux-ci et des signaux physiques sont alors localisables dans le repère du dispositif de visualisation en réalité augmentée $R_{RA}$ :

$$ ^{RA}P_I = {}^{RA}T_O\left( {}^{O}P_I \right) $$

Afin de clarifier les différents éléments de la scène 3D à visualiser, nous pouvons désigner par la suite comme « objet principal » l'objet 3D contenant les signaux à visualiser par l'opérateur et comme « objets secondaires » les objets 3D par rapport auxquels l'objet principal se positionne (notamment la pièce et le capteur). A noter que, s'agissant de réalité augmentée, chacun des objets décrits précédemment est visualisé sous forme d'hologramme et se superpose parfaitement à un objet réel, créant ainsi une occlusion de cet objet réel.

Comme déjà évoqué, l'objectif du procédé de l'invention est de permettre à l'utilisateur de visualiser l'objet principal constitué à partir de données ultrasonores (scan sectoriel par exemple) et de le positionner en 3D en réalité augmentée en donnant l'impression à l'utilisateur de le visualiser à l'intérieur de la pièce.

Pour que visuellement l'être humain interprète correctement le positionnement de cet objet principal dans l'espace visuel 3D, l'affichage de l'hologramme de cet objet principal ne suffit pas. L'hologramme donnera l'impression de flotter et sa relation spatiale avec le volume de la pièce sera perdue. Dans notre cas décrit ici, le volume en question est le volume traversé par les signaux ultrasonores ayant servi à construire cet objet principal.

L'invention consiste à afficher l'hologramme de cet objet principal accompagné d'un ensemble d'occlusions graphiques correspondant aux hologrammes des objets secondaires. Les objets secondaires sont la pièce et le capteur (accompagné de son porte-capteur) notamment. Pour que ces occlusions ne cachent pas totalement les objets réels, les occlusions ont avantageusement un niveau moyen de transparence. Les occlusions graphiques de la pièce (comprenant éventuellement une soudure à contrôler) et du capteur sont donc réalisées avec des textures et couleurs ayant un pourcentage de transparence.

Afin que le cerveau interprète l'objet principal comme faisant partie de l'intégrité interne de la pièce (et éventuellement de la soudure), il faut que cet objet principal apparaisse sur l'occlusion graphique de la pièce. Afin d'atteindre cet objectif, une ouverture en transparence des occlusions graphiques de la pièce est réalisée. Il s'agit de la découpe 80 de l'occlusion formée par la représentation virtuelle de l'objet principal. Cette ouverture est centrée sur le capteur (plus précisément le point F du capteur, point par rapport auquel est localisé l'objet principal à afficher). Cette ouverture ou découpe 80 est également un objet 3D et une partie de la surface de son volume est confondue avec la surface de l'objet principal.

Afin de ne pas gêner l'opérateur avec des informations situées hors de son champ de vue (par exemple l'arrière de la pièce), les données visibles, et donc la direction de l'ouverture, sont sélectionnées en fonction de la position et de l'orientation de l'œil de l'opérateur. Ainsi, si l'opérateur visualise les hologrammes depuis l'avant ou l'arrière de la pièce, les hologrammes restent bien orientés. Cela est rendu possible grâce à la calibration du dispositif de visualisation 16 par rapport au dispositif de suivi de mouvement 1.

L'étape 240 de détermination de la surface d'intersection 81 ou de visualisation des trajets ultrasonores comprend les étapes suivantes :

- Calcul (étape 241) des trajets effectués par le signal émis par le capteur 3 ;
- Réalisation (étape 242) d'un maillage 3D représentatif de la pièce mécanique 7, du porte-capteur 8, du capteur de contrôle non destructif 3, et des trajets effectués par le signal ;
- Plaquage (étape 243) des trajets effectués par le signal sur le maillage 3D.

En d'autres termes, l'étape 240 permet la visualisation d'un scan sectoriel au sein du dispositif de visualisation en réalité augmentée 16. Il s'agit de la surface d'intersection 81 du plan contenant l'axe d'émission dans la découpe 80 de l'occlusion.

La surface de visualisation de signaux 81 est déterminée d'une part à partir des caractéristiques du capteur, telles que sa position relative à la pièce à imager et les caractéristiques des signaux émis, notamment leurs orientations dans la pièce. Elle est déterminée d'autre part à partir de la découpe 80 de la pièce comme étant incluse dans cette découpe 80 et représentant, par exemple, la surface de fond de cette découpe 80.

La surface de visualisation des signaux 81 change avec chaque nouvelle acquisition de signaux, notamment si la position du capteur et/ou les orientations des signaux changent.

Grâce à l'invention, il est ainsi possible pour l'opérateur de visualiser les objets secondaires (c'est-à-dire objets réels : pièce mécanique 7 à contrôler, le porte-capteur 8 et le capteur 3), auxquels est superposé l'objet principal contenant les signaux à visualiser, c'est-à-dire l'ensemble formé par la découpe 80 et la surface 81.

Dans un mode particulier de réalisation, les étapes du procédé selon l'invention sont mises en œuvre par des instructions de programme d'ordinateur. En conséquence, l'invention vise aussi un programme d'ordinateur sur un support d'informations, ce programme étant susceptible d'être mis en œuvre dans un ordinateur, ce programme comportant des instructions adaptées à la mise en œuvre des étapes d'un procédé tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable. L'invention vise aussi un support d'informations lisible par un ordinateur, et comportant des instructions de programme d'ordinateur adaptées à la mise en œuvre des étapes d'un procédé tel que décrit ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé selon l'invention.

Il apparaîtra plus généralement à l'Homme du métier que diverses modifications peuvent être apportées aux modes de réalisation décrits ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'Homme du métier se basant sur ses connaissances générales.

**Revendications**

1. Procédé de visualisation en temps réel d'un signal de contrôle non destructif d'une pièce mécanique (7), le signal étant émis par un dispositif de contrôle non destructif comprenant :

   - un système optique de suivi de mouvement (1) auquel un repère de référence ($R_0$) est lié,
   - un porte-capteur (8),
   - un corps rigide (2),
   - un capteur de contrôle non destructif (3) solidaire du porte-capteur (8) relié de manière fixe au corps rigide (2),
   - un calculateur (6),

   le procédé de visualisation étant exécuté par un dispositif de visualisation en réalité augmentée (16) en vis-à-vis de la pièce mécanique (7), auquel un repère de réalité augmentée ($R_A$) est lié, le procédé étant **caractérisé en ce qu'**il comprend les étapes suivantes :

   - Déplacement (200) du capteur de contrôle non destructif (3) sur une zone d'examen de la pièce mécanique (7) ;
   - Simultanément à l'étape (200) de déplacement du capteur de contrôle non destructif (3), émission (210) à partir d'un point d'émission selon un axe d'émission et réception (220) du signal par le capteur ;
   - Détermination (230), par le calculateur (6), d'une découpe (80) d'une occlusion à l'intérieur de la pièce mécanique (7), la découpe (80) étant centrée autour du point d'émission ;
   - Détermination (240), par le calculateur (6), d'une surface de visualisation (81) de signaux construite à partir des trajets du signal, cette surface étant située à l'intérieur de la découpe (80) ;
   - Visualisation (250), sur le dispositif de visualisation en réalité augmentée,

■ d'une vue réelle de la pièce mécanique (7), du porte-capteur (8) et du capteur de contrôle non destructif (3),

■ d'une représentation 3D holographique de la pièce mécanique (7'), du porte-capteur (8') et du capteur de contrôle non destructif (3'), superposées à la vue réelle,

■ d'une représentation holographique de la découpe (80) de l'occlusion de la pièce et de la surface de visualisation des signaux (81), superposées à la vue réelle,

- l'occlusion étant réalisée au moins partiellement par une superposition de la représentation 3D holographique de la pièce mécanique (7') sur la vue réelle de la pièce mécanique (7),
- la découpe (80) de l'occlusion traversant la profondeur de la pièce mécanique dans sa représentation 3D holographique (7') jusqu'à atteindre la surface de visualisation (81) de signaux,
- la surface de visualisation (81) de signaux étant une quadrique déterminée de manière à correspondre à un maillage constitué par les trajets desdits signaux se propageant dans la pièce mécanique.

2. Procédé de visualisation selon la revendication 1, dans lequel l'orientation de la découpe (80) est liée à la localisation du dispositif de visualisation en réalité augmentée.

3. Procédé de visualisation selon l'une quelconque des revendications 1 ou 2, dans lequel la visualisation (250) des représentations 3D holographiques est réalisée en transparence.

4. Procédé de visualisation selon l'une quelconque des revendications 1 à 3, dans lequel l'étape (240) de détermination de la surface de visualisation (81) comprend les étapes suivantes :

- Calcul (241) des trajets effectués par le signal émis par le capteur ;
- Réalisation (242) d'un maillage 3D représentatif de la pièce mécanique (7), du porte-capteur (8), du capteur de contrôle non destructif (3), et des trajets effectués par le signal ;
- Plaquage (243) des trajets effectués par le signal sur le maillage 3D.

5. Procédé de visualisation selon l'une quelconque des revendications 1 à 4, comprenant au préalable une étape (190) de calibration du dispositif de visualisation en réalité augmentée (16) dans le repère de référence ($R_0$).

6. Procédé de visualisation selon la revendication 5, comprenant préalablement à l'étape (190) de calibration du dispositif de visualisation en réalité augmentée (16) dans le repère de référence ($R_0$), une étape de calibration (1000) du dispositif de contrôle non destructif.

7. Dispositif (10) de visualisation en temps réel d'un signal de contrôle non destructif d'une pièce mécanique (7), le dispositif (10) comprenant un dispositif de contrôle non destructif comprenant :

- un système optique de suivi de mouvement (1) auquel un repère de référence ($R_0$) est lié,
- un porte-capteur (8),
- un premier corps rigide (2),
- un capteur de contrôle non destructif (3) solidaire du porte-capteur (8) relié de manière fixe au premier corps rigide (2), le capteur étant destiné à être déplacé sur une zone d'examen de la pièce mécanique (7), et à émettre à partir d'un point d'émission et recevoir le signal selon un axe d'émission
- un calculateur (6),
le dispositif (10) comprenant en outre un dispositif de visualisation en réalité augmentée (16) en vis-à-vis de la pièce mécanique (7), auquel un repère de réalité augmentée ($R_A$) est lié,
le calculateur (6) étant configuré pour

- Déterminer une découpe de l'occlusion (80) de la pièce mécanique (7), la découpe (80) étant centrée autour du point d'émission ;
- Déterminer une surface de visualisation (81) de signaux construite à partir des trajets du signal, cette surface étant située à l'intérieur de la découpe (80) ;

et le dispositif de visualisation en réalité augmentée (16) est configuré pour afficher :

■ une vue réelle de la pièce mécanique (7), du porte-capteur (8) et du capteur de contrôle non destructif (3),

■ une représentation holographique de la pièce mécanique (7'), du porte-capteur (8') et du capteur de contrôle non destructif (3'), superposées à la vue réelle,

- une représentation holographique de la découpe (80) de l'occlusion de la pièce et de la surface de visualisation des signaux (81), superposées à la vue réelle.

- l'occlusion étant réalisée au moins partiellement par une superposition de la représentation 3D holographique de la pièce mécanique (7') sur la vue réelle de la pièce mécanique (7),
- la découpe (80) de l'occlusion traversant la profondeur de la pièce mécanique dans sa représentation 3D holographie (7') jusqu'à atteindre la surface de visualisation (81) de signaux,
- la surface de visualisation (81) de signaux étant une quadrique déterminée de manière à correspondre à un maillage constitué par les trajets desdits signaux se propageant dans la pièce mécanique.

8. Dispositif selon la revendication 7, comprenant en outre un dispositif de pointage (4) comportant une pointe (42) et relié de manière fixe à un second corps rigide (41), le dispositif de pointage (4) étant apte à déterminer la position de points sur une surface.

9. Programme d'ordinateur comportant des instructions qui conduisent le dispositif selon la revendication 7 ou 8 à exécuter les étapes du procédé selon l'une quelconque des revendications 1 à 6.

10. Support d'enregistrement lisible par un ordinateur sur lequel est enregistré le programme d'ordinateur selon la revendication 9.

**Patentansprüche**

1. Verfahren zur Echtzeitanzeige eines Signals zur zerstörungsfreien Prüfung eines mechanischen Teils (7), wobei das Signal von einer Vorrichtung zur zerstörungsfreien Prüfung ausgesendet wird, umfassend:

- ein optisches Bewegungsverfolgungssystem (1), mit dem ein Bezugskoordinatensystem ($R_0$) verknüpft ist,
- einen Sensorträger (8),
- einen starren Körper (2),
- einen Sensor zur zerstörungsfreien Prüfung (3), der mit dem Sensorträger (8) einstückig ist, der fest mit dem starren Körper (2) verbunden ist,
- einen Rechner (6),

wobei das Anzeigeverfahren durch eine Anzeigevorrichtung in erweiterter Realität (16) gegenüber dem mechanischen Teil (7), mit dem ein Koordinatensystem erweiterter Realität ($R_A$) verknüpft ist, ausgeführt wird, wobei das Verfahren **dadurch gekennzeichnet ist, dass** es die folgenden Schritte umfasst:

- Verschieben (200) des Sensors zur zerstörungsfreien Prüfung (3) in einem Prüfbereich des mechanischen Teils (7);
- gleichzeitig zum Schritt (200) zum Verschieben des Sensors zur zerstörungsfreien Prüfung (3), Aussenden (210) von einem Aussendepunkt entlang einer Aussendeachse und Empfangen (220) des Signals durch den Sensor;
- Bestimmen (230), durch den Rechner (6), eines Ausschnitts (80) eines Einschlusses im Inneren des mechanischen Teils (7), wobei der Ausschnitt (80) um den Aussendepunkt herum zentriert ist;
- Bestimmen (240), durch den Rechner (6), einer Signalanzeigefläche (81), die anhand der Strecken des Signals aufgebaut wird, wobei sich diese Fläche im Inneren des Ausschnitts (80) befindet;
- Anzeigen (250), auf der Anzeigevorrichtung in erweiterter Realität:

- einer reellen Ansicht des mechanischen Teils (7), des Sensorträgers (8) und des Sensors zur zerstörungsfreien Prüfung (3),
- einer holographischen 3D-Darstellung des mechanischen Teils (7'), des Sensorträgers (8') und des Sensors zur zerstörungsfreien Prüfung (3'), die der reellen Ansicht überlagert werden,
- einer holographischen Darstellung des Ausschnitts (80) des Einschlusses des Teils und der Signalanzeigefläche (81), die der reellen Ansicht überlagert werden,

- wobei der Einschluss mindestens teilweise durch eine Überlagerung der holographischen 3D-Darstellung des mechanischen Teils (7') auf der reellen Ansicht des mechanischen Teils (7) erstellt wird,
- wobei der Ausschnitt (80) des Einschlusses die Tiefe des mechanischen Teils in seiner holographischen 3D-Darstellung (7') durchquert, bis die Signalanzeigefläche (81) erreicht wird,
- wobei die Signalanzeigefläche (81) eine Quadrik ist, die so bestimmt wird, dass sie einem Netz entspricht, das durch die Strecken der Signale erzeugt wird, die sich in dem mechanischen Teil ausbreiten.

2. Anzeigeverfahren nach Anspruch 1, wobei die Ausrichtung des Ausschnitts (80) mit der Position der Anzeigevorrichtung in erweiterter Realität verknüpft ist.

3. Anzeigeverfahren nach einem der Ansprüche 1 oder 2, wobei die Anzeige (250) der holographischen 3D-Darstellungen transparent erstellt wird.

4. Anzeigeverfahren nach einem der Ansprüche 1 bis 3, wobei der Schritt (240) zum Bestimmen der Anzeigefläche (81) die folgenden Schritte umfasst:

   - Berechnen (241) der durch das von dem Sensor ausgesendete Signal zurückgelegten Strecken;
   - Erstellen (242) eines 3D-Netzes, das für das mechanische Teil (7), den Sensorträger (8), den Sensor zur zerstörungsfreien Prüfung (3) und die von dem Signal zurückgelegten Strecken repräsentativ ist;
   - Auftragen (243) der durch das Signal zurückgelegten Strecken auf dem 3D-Netz.

5. Anzeigeverfahren nach einem der Ansprüche 1 bis 4, umfassend zuvor einen Schritt (190) zum Kalibrieren der Anzeigevorrichtung in erweiterter Realität (16) in dem Bezugskoordinatensystem ($R_0$).

6. Anzeigeverfahren nach Anspruch 5, umfassend, vor dem Schritt (190) zum Kalibrieren der Anzeigevorrichtung in erweiterter Realität (16) in dem Bezugskoordinatensystem ($R_0$), einen Schritt zum Kalibrieren (1000) der Vorrichtung zur zerstörungsfreien Prüfung.

7. Echtzeitanzeigevorrichtung (10) für ein Signal zur zerstörungsfreien Prüfung eines mechanischen Teils (7), wobei die Vorrichtung (10) eine Vorrichtung zur zerstörungsfreien Prüfung umfasst, umfassend:

   - ein optisches Bewegungsverfolgungssystem (1), mit dem ein Bezugskoordinatensystem ($R_0$) verknüpft ist,
   - einen Sensorträger (8),
   - einen ersten starren Körper (2),
   - einen Sensor zur zerstörungsfreien Prüfung (3), der mit dem Sensorträger (8) einstückig ist, der fest mit dem ersten starren Körper (2) verbunden ist, wobei der Sensor dazu gedacht ist, in einem Prüfbereich des mechanischen Teils (7) verschoben zu werden, und das Signal von einem Aussendepunkt auszusenden und entlang einer Aussendeachse zu empfangen;
   - einen Rechner (6),
   wobei die Vorrichtung (10) ferner eine Anzeigevorrichtung in erweiterter Realität (16) gegenüber dem mechanischen Teil (7) umfasst, mit dem ein Koordinatensystem erweiterter Realität ($R_A$) verknüpft ist,
   wobei der Rechner (6) zu Folgendem konfiguriert ist:

   - Bestimmen eines Ausschnitts des Einschlusses (80) des mechanischen Teils (7), wobei der Ausschnitt (80) um den Aussendepunkt herum zentriert ist;
   - Bestimmen einer Signalanzeigefläche (81), die anhand der Strecken des Signals aufgebaut wird, wobei sich diese Fläche im Inneren des Ausschnitts (80) befindet;

   und die Anzeigevorrichtung in erweiterter Realität (16) ist dafür konfiguriert, folgendes anzuzeigen:

   - eine reelle Ansicht des mechanischen Teils (7), des Sensorträgers (8) und des Sensors zur zerstörungsfreien Prüfung (3),
   - eine holographische Darstellung des mechanischen Teils (7'), des Sensorträgers (8') und des Sensors zur zerstörungsfreien Prüfung (3'), die der reellen Ansicht überlagert werden,
   - eine holographische Darstellung des Ausschnitts (80) des Einschlusses des Teils und der Signalanzeigefläche (81), die der reellen Ansicht überlagert werden,
   - wobei der Einschluss mindestens teilweise durch eine Überlagerung der holographischen 3D-Darstellung des mechanischen Teils (7') auf der reellen Ansicht des mechanischen Teils (7) erstellt wird,
   - wobei der Ausschnitt (80) des Einschlusses die Tiefe des mechanischen Teils in seiner holographischen 3D-Darstellung (7') durchquert, bis die Signalanzeigefläche (81) erreicht wird,
   - wobei die Signalanzeigefläche (81) eine Quadrik ist, die so bestimmt wird, dass sie einem Netz entspricht,

**EP 4 396 572 B1**

das durch die Strecken der Signale erzeugt wird, die sich in dem mechanischen Teil ausbreiten.

8. Vorrichtung nach Anspruch 7, ferner umfassend eine Zeigevorrichtung (4), aufweisend eine Spitze (42) und fest mit einem zweiten starren Körper (41) verbunden, wobei die Zeigevorrichtung (4) dazu geeignet ist, die Position von Punkten auf einer Oberfläche zu bestimmen.

9. Computerprogramm, aufweisend Anweisungen, die die Vorrichtung nach Anspruch 7 oder 8 veranlassen, die Schritte des Verfahrens nach einem der Ansprüche 1 bis 6 auszuführen.

10. Speichermedium, das von einem Computer lesbar ist, auf dem das Computerprogramm nach Anspruch 9 gespeichert ist.

**Claims**

1. A method for visualising, in real time, a signal for the non-destructive testing of a mechanical part (7), the signal being emitted by a non-destructive testing device comprising:

   - an optical motion tracking system (1) to which a reference coordinate system ($R_0$) is tied,
   - a sensor holder (8),
   - a rigid body (2),
   - a non-destructive testing sensor (3) integral with the sensor holder (8) connected fixedly to the rigid body (2),
   - a computer (6),

   the visualisation method being executed by an augmented reality visualisation device (16) facing the mechanical part (7), to which an augmented reality coordinate system ($R_A$) is tied, the method being **characterised in that** it comprises the following steps:

   - moving (200) the non-destructive testing sensor (3) over an examination area of the mechanical part (7);
   - simultaneously with the step (200) of moving the non-destructive testing sensor (3), emitting (210) the signal from a point of emission along an emission axis and receiving (220) the signal by way of the sensor;
   - determining (230), by way of the computer (6), a cut-out (80) of an occlusion inside the mechanical part (7), the cut-out (80) being centred around the point of emission;
   - determining (240), by way of the computer (6), a signal visualisation surface (81) constructed from the paths of the signal, this surface being located inside the cut-out (80);
   - visualising (250), on the augmented reality visualisation device:

     - a real view of the mechanical part (7), of the sensor holder (8) and of the non-destructive testing sensor (3),
     - a holographic 3D representation of the mechanical part (7'), of the sensor holder (8') and of the non-destructive testing sensor (3'), which are superimposed on the real view,
     - a holographic representation of the cut-out (80) of the occlusion of the part and of the signal visualisation surface (81), which are superimposed on the real view,

   - the occlusion being created at least partially by superimposing the holographic 3D representation of the mechanical part (7') on the real view of the mechanical part (7),
   - the cut-out (80) of the occlusion passing through the depth of the mechanical part in its holographic 3D representation (7') until it reaches the signal visualisation surface (81),
   - the signal visualisation surface (81) being a quadric that is determined so as to correspond to a mesh formed by the paths of said signals propagating in the mechanical part.

2. The visualisation method according to claim 1, wherein the orientation of the cut-out (80) is tied to the location of the augmented reality visualisation device.

3. The visualisation method according to any one of claims 1 or 2, wherein the visualisation (250) of the holographic 3D representations is created in transparency.

4. The visualisation method according to any one of claims 1 to 3, wherein the step (240) of determining the visualisation surface (81) comprises the following steps:

- computing (241) the paths travelled by the signal emitted by the sensor;
- creating (242) a 3D mesh representative of the mechanical part (7), of the sensor holder (8), of the non-destructive testing sensor (3), and of the paths travelled by the signal;
- plating (243) the paths travelled by the signal onto the 3D mesh.

5. The visualisation method according to any one of claims 1 to 4, comprising, beforehand, a step (190) of calibrating the augmented reality visualisation device (16) in the reference coordinate system ($R_0$).

6. The visualisation method according to claim 5, comprising, prior to the step (190) of calibrating the augmented reality visualisation device (16) in the reference coordinate system ($R_0$), a step of calibrating (1000) the non-destructive testing device.

7. A device (10) for visualising, in real time, a signal for the non-destructive testing of a mechanical part (7), the device (10) comprising a non-destructive testing device comprising:

   - an optical motion tracking system (1) to which a reference coordinate system ($R_0$) is tied,
   - a sensor holder (8),
   - a first rigid body (2),
   - a non-destructive testing sensor (3) integral with the sensor holder (8) connected fixedly to the first rigid body (2), the sensor being designed to move over an examination area of the mechanical part (7), and to emit the signal from a point of emission and receive the signal along an emission axis,
   - a computer (6),
   the device (10) further comprising an augmented reality visualisation device (16) facing the mechanical part (7), to which an augmented reality coordinate system ($R_A$) is tied,
   the computer (6) being configured to

      - determine a cut-out of the occlusion (80) of the mechanical part (7), the cut-out (80) being centred around the point of emission;
      - determine a signal visualisation surface (81) constructed from the paths of the signal, this surface being located inside the cut-out (80);

   and the augmented reality visualisation device (16) is configured to display:

      ▪ a real view of the mechanical part (7), of the sensor holder (8) and of the non-destructive testing sensor (3),
      ▪ a holographic representation of the mechanical part (7'), of the sensor holder (8') and of the non-destructive testing sensor (3'), which are superimposed on the real view,
      ▪ a holographic representation of the cut-out (80) of the occlusion of the part and of the signal visualisation surface (81), which are superimposed on the real view,
      - the occlusion being created at least partially by superimposing the holographic 3D representation of the mechanical part (7') on the real view of the mechanical part (7),
      - the cut-out (80) of the occlusion passing through the depth of the mechanical part in its holographic 3D representation (7') until it reaches the signal visualisation surface (81),
      - the signal visualisation surface (81) being a quadric that is determined so as to correspond to a mesh formed by the paths of said signals propagating in the mechanical part.

8. The device according to claim 7, further comprising a pointing device (4) containing a tip (42) and connected fixedly to a second rigid body (41), the pointing device (4) being able to determine the position of points on a surface.

9. A computer program containing instructions that cause the device according to claim 7 or 8 to execute the steps of the method according to any one of claims 1 to 6.

10. A computer-readable storage medium on which the computer program according to claim 9 is stored.

FIG.1

FIG.2

FIG.3

FIG.4

FIG.5

FIG.6

FIG.7

FIG.8

FIG.9

FIG.10

FIG.11

FIG.12

FIG.13

FIG.14

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102016003543 A1
- FR 3087254 B1